Europäisches Patentamt

European Patent Office

Office européen des brevets

(19)

(11) **EP 0 902 273 A2**

(12) **EUROPÄISCHE PATENTANMELDUNG**

(43) Veröffentlichungstag:
17.03.1999 Patentblatt 1999/11

(51) Int Cl.⁶: **G01N 21/65**

(21) Anmeldenummer: 98250270.0

(22) Anmeldetag: 24.07.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: 12.09.1997 DE 19741123

(71) Anmelder: I.F.T. Institut für
Troposphärenforschung e.V.
04303 Leipzig (DE)

(72) Erfinder:
• **Heintzenberg, Jost**
**04107 Leipzig (DE)**
• **Keller, Stefan**
**04318 Leipzig (DE)**

(74) Vertreter: **Ziebig, Marlene, Dr. Dipl.-Chem. et al**
**Patentanwälte**
**Gulde Hengelhaupt Ziebig**
**Lützowplatz 11-13**
**10785 Berlin (DE)**

(54) **Verfahren und Vorrichtung zur quantitativen Bestimmung von Russ**

(57) Die Erfindung betrifft ein zuverlässiges und reproduzierbares Verfahren zur Quantifizierung von Ruß, das unter Nutzung der gleichen optischen Vorrichtung mittels kombinierter Raman-spektroskopischer und Lichtabsorptions- oder alternativ Reflexionsmessung die Bestimmung des graphitischen Kohlenstoffanteils und des Kohlenstoffanteils, der auf die polycyclischen aromatischen Kohlenwasserstoffe zurückgeht, erlaubt. Zusätzlich werden mit dem Verfahren auch im Ruß vorkommende Sulfate und andere nicht absorbierende Substanzen erfaßt, falls sie in der Probe vorhanden sind.

**Beschreibung**

Die Erfindung betrifft ein zuverlässiges und reproduzierbares Verfahren zur Quantifizierung von Ruß, das unter Nutzung der gleichen optischen Vorrichtung mittels kombinierter Raman-spektroskopischer und Lichtabsorptions- oder alternativ Reflexionsmessung die Bestimmung des graphitischen Kohlenstoffanteils und des Kohlenstoffanteils, der auf die polycyclischen aromatischen Kohlenwasserstoffe zurückgeht, erlaubt. Zusätzlich werden mit dem Verfahren auch im Ruß vorkommende Sulfate und andere nichtabsorbierende Stoffe erfaßt, falls sie in der Probe vorhanden sind. Rußpartikel werden bei der Verbrennung aller kohlenstoffhaltiger Stoffe freigesetzt. Die massenmäßig dominierende chemische Komponente von Ruß ist graphitischer Kohlenstoff. Daneben treten allerdings andere chemische Komponenten mit ringförmiger Struktur auf, deren Ringanzahl alle Werte zwischen dem Einfachring von Benzol im Ausgangsmaterial und der der vollständigen Graphitstruktur annehmen kann. Die quantitative Bestimmung von Ruß ist ein wichtiges Anliegen, da von ihm eine potentielle GesundheiLsgefährdung durch die anhaftenden polycylischen aromatischen Kohlenwasserstoffe (PAHs) ausgeht, und er das Klima beeinflußt. Nicht zuletzt spielt die Rußanalyse auch bei der Entwicklung effektiver Motoren eine Rolle.

Zur Bestimmung von Ruß bzw. Graphit werden bisher zwei Klassen von Meßverfahren eingesetzt. Beide sind unspezifisch für graphitischen Kohlenstoff, d.h. andere Stoffe in einer zu analysierenden Probe wirken auf das jeweilige Meßsignal ein. Die erste Klasse betrifft lichtoptische Verfahren, die entweder die Absorption(Hansen, et al., 1983, Sci. Total Environ. 36, 191-196; Heintzenberg, J. 1982, Atmos. Environ. 16, 2461-2469; Hitzenberger, et al. 1996, J. Geophys. Res. 101, 19601-19606). oder Reflexion (Bailey, D. L. R., and Clayton, P. 1982, Atmos. Environ. 16, 2683-2690, Edwards, et al., R. J. 1983, Atmos. Environ. 17, 2337-2341; OECD, 1964, Report Organisation for Economic Cooperation and Development. 15pp) von Strahlung im sichtbaren und/oder infraroten Wellenlängenbereich ausnutzen. Auch photoakustische Verfahren (Bennett and Patty, 1982, Appl. Opt. 21, 371-374; Bennett Jr., et al., 1981, Appl. Opt. 20, 3475-3477; Petzold and Niessner, 1995, Appl. Phys. Lett. 66, 1285-1287)., die eine Temperaturerhöhung der Probe aufgrund von Strahlungsabsorption ausnutzen, gehören zu dieser Klasse. Da Metalle und viele anorganische und organische Materialien im oben genannten Spektralbereich eine Strahlungsabsorption zeigen, sind diese Vefahren unspezifisch. Ein weiterer Nachteil dieser Methoden basiert auf der Tatsache, daß auch nichtabsorbierende Stoffe in der Probe die Meßsignale beeinflussen können (Petzold, et al., 1997, Atmos. Env. 31, 661-672)..

Die zweite Klasse von Verfahren des Standes der Technik betrifft Verbrennungsmethoden, bei denen der in der Probe enthaltene Kohlenstoff verbrannt wird und die dabei entstehenden Verbrennungsprodukte gemessen werden oder die dadurch bedingte Änderung der optischen Probeneigenschaften registriert wird (Birch and Cary, 1996, J. Aerosol Sci. Technol. 25, 221-241; Turpin, et al., 1990, Aerosol Sci. Tech. 12, 161-171). Als "Coulometrie" ist die Verbrennungsmethode in Deutschland inzwischen als Referenz- oder Konventionalverfahren zur Bestimmung von Ruß in eine Richtlinie des VDI-DIN (2465 Blatt 1) aufgenommen. Eine weitere Variante des Verfahrens wird zur Zeit als "Thermographische Bestimmung von organischem und elementarem Kohlenstoff" von VDI-DIN (2465 Blatt 2) als Richtlinienentwurf diskutiert, obwohl beide Verfahren unspezifisch sind. Neben der fehlenden Spezifität sind die Hauptnachteile dieser Verfahrensklasse a) die Zerstörung der Probe, b) die nicht auszuschließende Artefaktbildung durch Verkohlung von organischen Kohlenstoffkomponenten in der Probe bei deren Erhitzung und c) deutliche Quantifizierungsprobleme bei der Trennung höhermolekularer organischer Komponenten von graphitischem Kohlenstoff. Die Raman-Spektroskopie ermöglicht die spezifische, rasche und zerstörungsfreie Identifikation von graphitischem Kohlenstoff in Materialproben (Rosen, et al., 1978, Appl. Opt. 17, 3859-3861; Rosen and Novakov, 1977, Nature 266, 708-710; Rosen and Novakov, 1978, Atmos. Environ. 12, 923-927; Tuinstra and Koenig, 1970, J. Chem. Phys. 53, 1126-1130).. und dessen Quantifizierung anhand der zugrundeliegenden Graphitstruktur. Wegen der schwachen Ramanbanden des Graphits, dem lichtabsorptionsbedingten starken thermischen Signaluntergrund, optischen Inhomogenitäten innerhalb einer Probe, fluoreszierenden Probenbestandteilen und dem stark störenden Einfluß von Kohlenstoff im Substrat der Probe war es aber bisher nicht möglich, Ruß mit dieser Methode zuverlässig zu quantifizieren.

Die optische Stabilität des optischen gesamtsystems konnte nicht reproduzierbar gewährleistet werden.

Aufgabe der Erfindung war es deshalb, ein reproduzierbares Verfahren zur quantitativen Bestimmung von Ruß bereitzustellen, mit dem der Anteil an graphitischem Kohlenstoff und der mögliche Anteil an polycyclischen aromatischen Kohlenwasserstoffen (PAHs) und anderer Komponenten im Ruß zuverlässig bestimmt werden kann.

Die Aufgabe der Erfindung wird durch ein Verfahren gelöst, bei dem unter Nutzung der gleichen optischen Vorrichtung mittels kombinierter Raman-spektroskopischer und Lichtabsorptions- oder alternativ Reflexionsmessung der graphitische Kohlenstoffanteil in der Probe und der Kohlenstoffanteil, der auf die PAHs zurückgeht, bestimmt wird. Gegebenenfalls kann durch Aufzeichnung eines Reflexionsspektrums auch der Anteil an Sulfaten und anderen nichtabsorbierenden Stoffen im Ruß quantifiziert werden.

Das erfindungsgemäße Verfahren ist in den Ansprüchen 1 bis 4 näher gekennzeichnet.

Es basiert darauf, daß der Ruß auf einem Probenträger (Substrat) gesammelt wird, der für das Verfahren optimal aufgebaut ist. Dieser Probenträger enthält Kohlenstoff, der in einer Bindungsform vorliegt, die der des graphitischen Kohlenstoffs so weit ähnelt, daß im Raman-Spektrum des Substrats Linien in dem für Ruß charakteristischen Spektralbereich auftauchen und somit als innerer Standard des Verfahrens dienen können. Vorteilhaft kann als Probenträger ein Polycarbonatfilter, z. B. Nuclepore® der Fa. Millipore, eingesetzt werden. Nach Aufzeichnung der Raman-Spektren wird, um Störungen durch unstrukturierte Anteile im Meßsignal (wie z. B. thermische Emission, Fluoreszenz) zu beseitigen, die zweite Ableitung der Meßspektren berechnet. Dadurch treten die Raman-Banden von Ruß und Sulfat stabil und quantitativ aus den Störsignalen hervor.

Durch eine gleichzeitige Messung der Lichtabsorptions- und gegebenenfalls der Reflexionsspektren der Probe mit dem selben optischen Aufbau läßt sich durch eine Kombination der Raman-spektroskopischen Quantifizierung von graphitischem Kohlenstoff sowie der Lichtabsorptions- oder alternativ Reflexionsmessung die auf den Graphitanteil in der Probe entfallende Lichtabsorption und gegebenenfalls die von nicht absorbierenden Stoffen stammende Reflexion bestimmen. Durch die Bestimmung des Graphitanteils wird die für das äußere Erscheinungsbild einer Rußprobe entscheidende und die bei den unspezifischen optischen Rußmeßverfahren ausgenutzte schwarze Rußkomponente eindeutig festgelegt. Tritt zwischen dem mittels Raman-Spekroskopie bestimmten Graphitanteil und dem mittels Lichtabsorption bestimmten Graphitanteil eine Differenz auf, so ist diese auf den in der entsprechenden Probe enthaltenen Anteil an polycyclischen aromatischen Kohlenwasserstoffen zurückzuführen. Die Unterscheidung von graphitischem Kohlenstoff von seinen Vorläufern mit geringerer Ringanzahl und deren Quantifizierung in der gleichen Probe geschieht also a) durch Ausnutzen der Raman-spektroskopischen Signaturen im Spektrum und b) durch die Auswertung der Lichtabsorptions- und gegebenenfalls Reflexionsspektren.

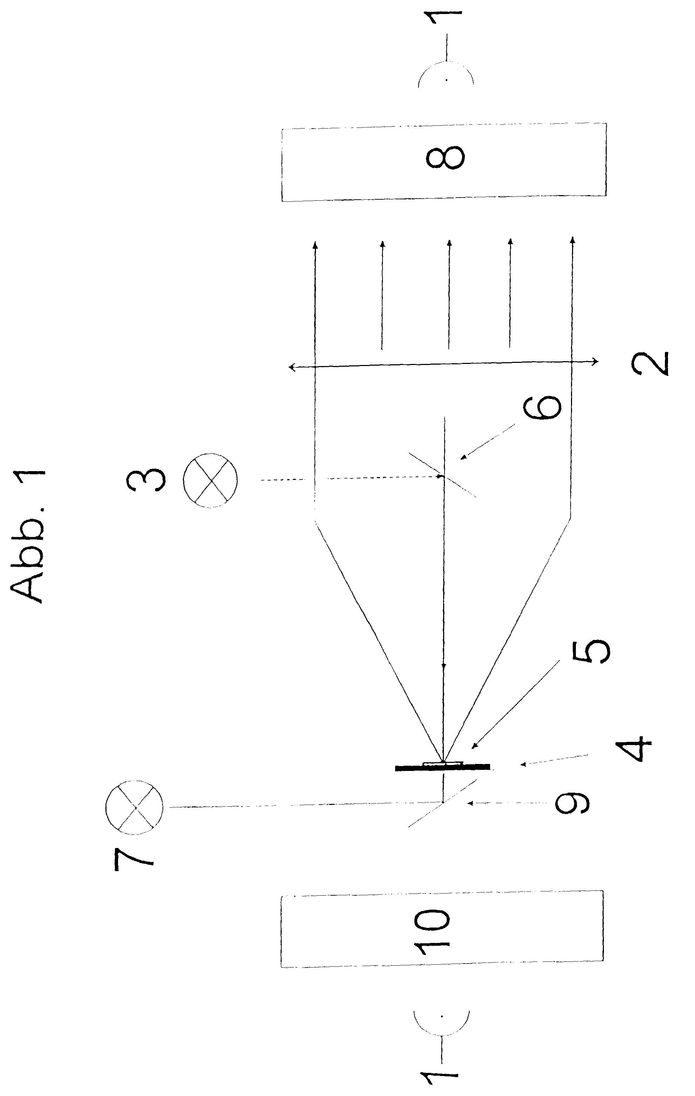

Erfindungsgemäß wird eine Vorrichtung zur Durchführung des beschriebenen Verfahrens vorgeschlagen, die in den Ansprüchen 5-10 näher gekennzeichnet ist. Eine bevorzugte Ausführungsform dieser Vorrichtung ist in Abb. 1 dargestellt, wobei diese Ausführungsform auch ein Spektrometer (10) zur Detektion von reflektierter Strahlung, die durch mögliche Sulfate und nicht absorbierende Substanzen in der Rußprobe zustande kommt, beinhaltet.

Abb. 2 zeigt die Raman-Spektren eines erfindungsgemäßen kohlenstoffhaltigen Probenträgers (2) und einer atmosphärischen Rußprobe auf dem Träger (1) sowie das Absorptionsspektrum der gleichen Probe (3).

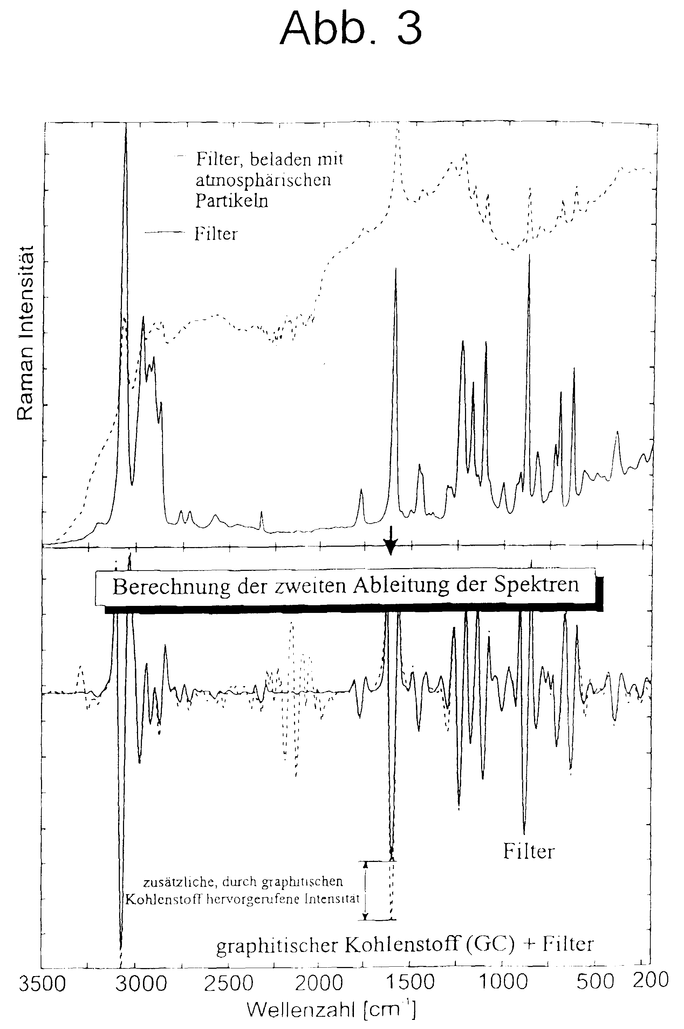

In Abb. 3 ist die zweite Ableitung dieser in Abb. 2 gezeigten Raman-Spektren dargestellt. Die Bande bei 1600cm$^{-1}$ stammt von der Rußprobe und dem Probenträger, die Bande bei 887cm-1 basiert allein auf dem Probenträger.

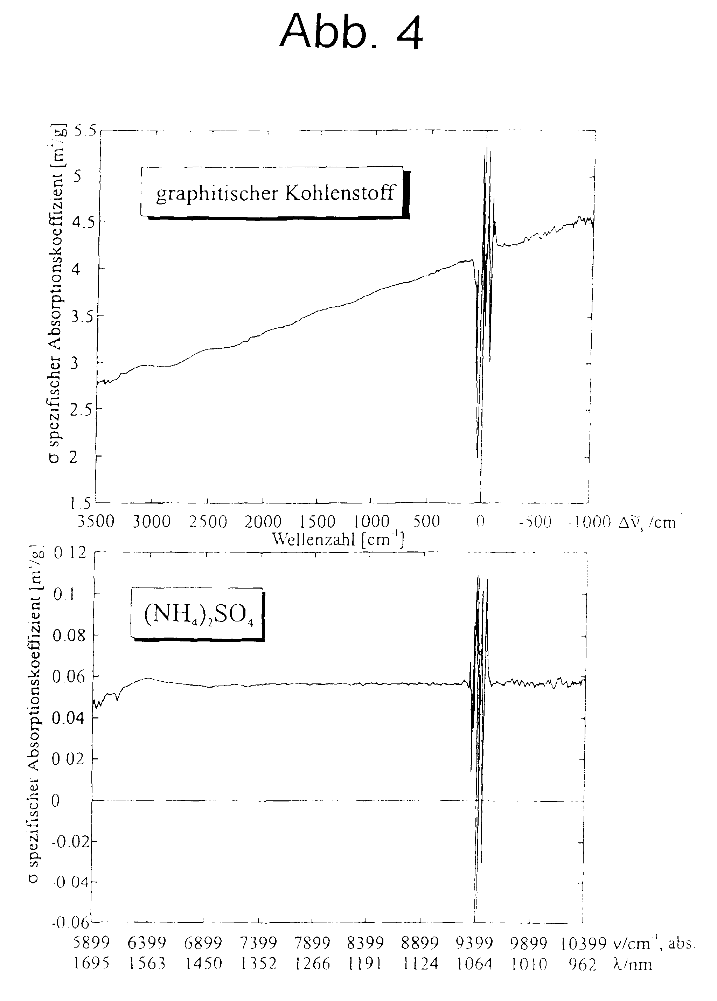

Abb. 4 zeigt die beispielhaft mit der erfindungsgemäßen Vorrichtung gemessenen spezifischen Absorptionskoeffizienten von Ruß (Monarch 71) und Ammoniumsulfat.

Abb. 5 zeigt die Kalibrationsgeraden aus dem erfindungsgemäßen Beispiel für Ruß (Monarch 71).

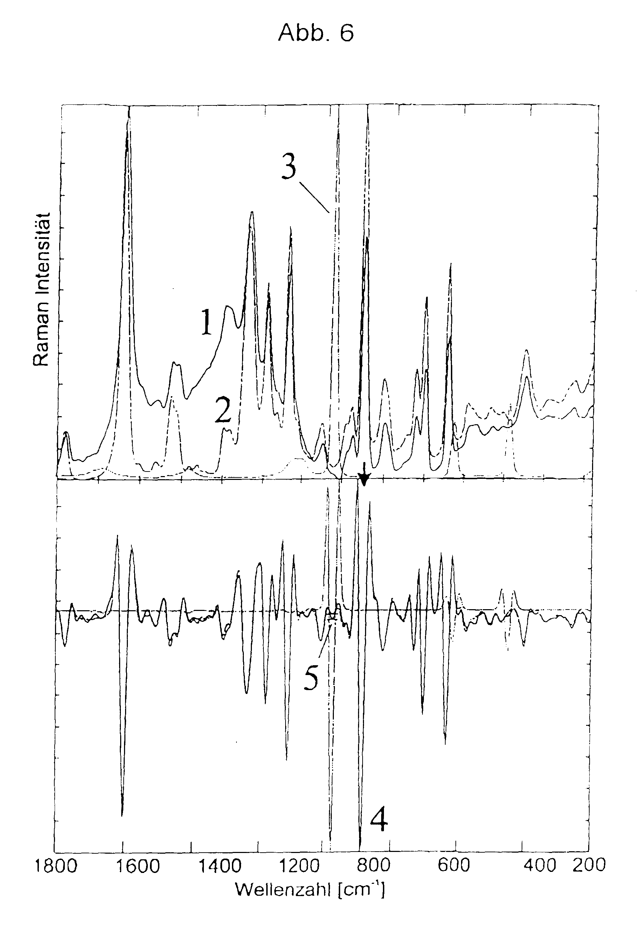

Abb. 6 zeigt ein Raman-Spektrum für die Quantifizierung von Sulfat.

**Ausführungsbeispiel**

Bestimmung des graphischen Kohlenstoffs in einer atmosphärischen Rußprobe.

a) Registrierung eines Raman-Spektrums mittels des Fourier-Transform-Infrarotspektrometers (IFS 55 der Fa.Bruker, Karlsruhe) sowie eines daran angekoppelten Raman-Moduls (FRA-106).

Um eine Stabilisierung der Erregerlichtquelle, eines luftgekühlten Nd-YAG-Lasers mit einer Anregungswellenlänge von 1064 nm zu erreichen, muß der Laser bereits einige Minuten vor der Messung aktiviert werden. Während der Stabilisierungsphase wird die auf einem Nuclepore$^{ß}$ (Polycarbonatfilter) abgeschiedene Probe in einen Probenhalter eingespannt und die bei der Laserbestrahlung der Probe gestreute Strahlung mittels einer asphärischen Linse in das Spektrometer überführt. Durch das Sekundär- bzw. Rayleigh-Filter wird die Erregerlinie von der Raman-Streuung separiert, in einem Interferometer spektral zerlegt und mittels eines modifizierten Ge-Detektors detektiert.

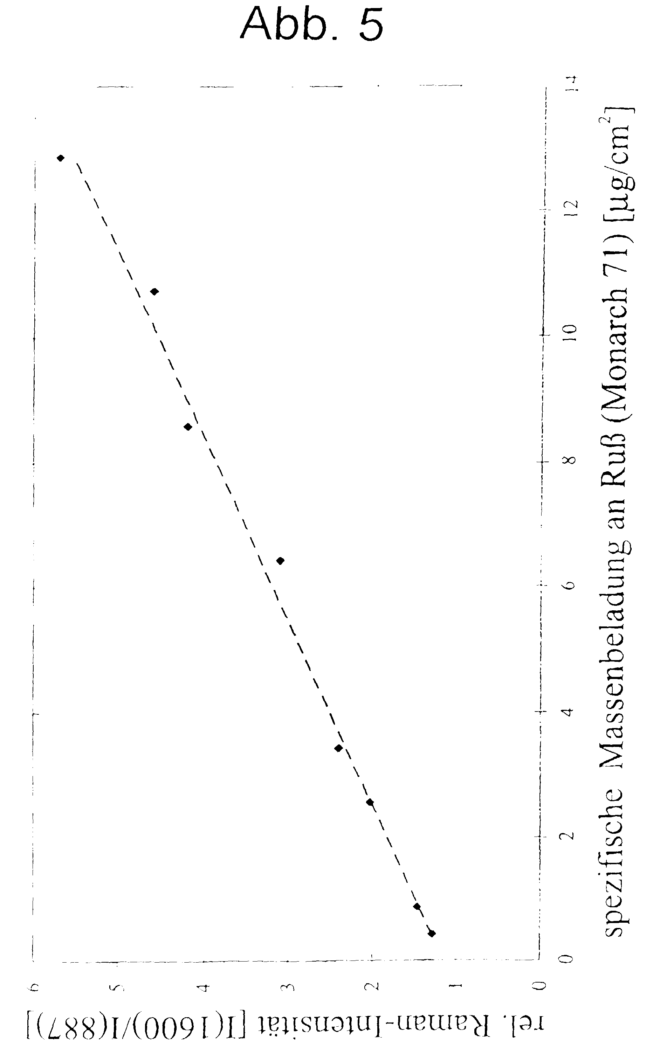

In einem weiteren Schritt werden mittels der von der Fa. Bruker gelieferten Software: Opus die zweiten Ableitungen (Methode nach Sawitzky-Golay mit 17 Glättungspunkten (SMP)) der Spektren berechnet und das Intensitätsverhältnis der von dem Ruß und dem Filter stammenden Bande bei 1600 cm$^{-1}$ sowie der allein auf das Filtermaterial basierenden Bande bei 887 cm$^{-1}$ bestimmt. Mittels einer Kalibrationsreihe (vgl. Abb. 5) läßt sich damit der Gehalt an graphitischem Kohlenstoff bestimmen.

Auswertung der beschriebenen Aerosolprobe:

Multiplikation der bei Berechnung der zweiten Ableitung der Raman-Spektren erhaltenen Intensitäten mit 10$^8$.
I(1600 cm$^{-1}$) -100,158
I(887 cm$^{-1}$) - 65,013
=> I(1600)/(I(887) = 1,54
dieser Wert läßt sich mittels der Kalibrationsgeraden in Abb. 5 in eine entsprechende graphitische Kohlenstoffmenge umrechnen.

KalibraLionsgerade (17 SMP):

```
rel. Raman-Intensität

= 0,34 * spez. Massenbeladung an graphitischem Kohlenstoff
   [µg/cm²] + 1,14
```

=> spez. Massenbeladung an graphitischem Kohlenstoff [µg/cm²]

= (rel. Ram-Intensität 1,14)/0,34

= (1,54 - 1,14)/0,34

= 1,18 µg/cm²

Bei einer durchgeflossenen Gasmenge von 5,76 m³ und einer beprobten Fläche von 1 cm² ergibt sich somit eine Konzentration an graphitischem Kohlenstoff von:

Konzentration an graphitischem Kohlenstoff

= (spez. Massenbeladung an graphitischem Kohlenstoff * Probenfläche)/durchgeflossene Gasmenge

= 1,18 µg/cm² * 1 cm² /5,76 m³

= 0,21 µg/m³

Absorptionsspektren

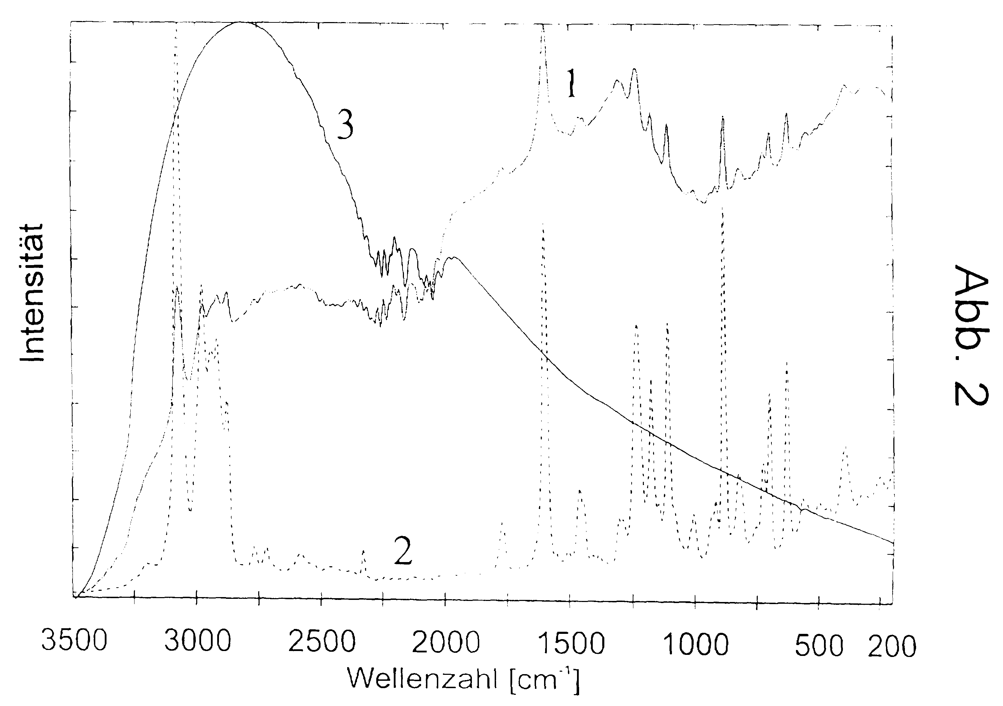

b) Um das Absorptionsspektrum zu bestimmen, wird die Strahlung einer breitbandigen NIR-Strahlungsquelle über einen Spektralonkeil auf die Probe umgelenkt und die abgeschwächte Strahlung im selben Spektrometer spektral zerlegt und detektiert. Um die Absorption der Probe bestimmen zu können, muß noch das Absorptionsspektrum des reinen Filtermediums registriert werden. Die durch graphitischen Kohlenstoff bedingte Absorptionsänderung läßt sich wie im Falle der Raman-Spektroskopie mittels der gleichen Kalibrationsspektren bestimmen und der Absorptionskoeffizient durch eine lineare Regression an allen Datenpunkten (bei jeder registrierten Wellenzahl) durchführen (vgl. Abb. 2).

Berechnung der Rußmenge

$$I\ (-599,4\ cm^{-1} = 1000\ nm) = 38,579$$

Kalibrationsgerade für -1000 nm:

```
-100* ln (I/I₀)

= 4,37* spez. Massenbeladung an Ruß [µg/cm²] + 6,68
```

⇨ spez. Massenbeladung an Ruß [[µg/cm²]

= (-100* ln (I/I₀) -6,68)/4,37

= (38,58 - 6,68)/4,37

= 7,3 µg/cm²

Bei einer durchgeflossenen Gasmenge von 5,76 cm³ und einer beprobten Fläche von 1 cm² ergibt sich somit eine Rußkonzentration von:

Rußkonzentration

= (spez. Massenbeladung an Ruß * Probenfläche)/durchgeflossene Gasmenge

= 7,3 µg/cm² * 1 cm²/5,76 m³

= 1,27 µg/m³

**Bezugszeichenliste**

**Abb. 1**

1   Detektor
2   Linse
3   monochromatische Lichtquelle
4   Probenträger
5   Rußprobe
6   Umlenkeinheit
7   breitbandige Lichtquelle
8   Spektrometer

**Abb. 2**

1   Raman-Spektrum einer Rußprobe auf dem Polycarbonat filter
2   Raman-Spektrum des Polycarbonatfilters
3   Absorptionsspektrum

**Abb. 6**

1   Filter, belegt mit atmosphärischer Probe
2   Raman-Spektrum vom Filter
3   Raman-Spektrum von Ammoniumsulfat
4   Referenz-Filterbande
5   die zusätzliche, durch Ammoniumsulfat hervorgerufene Raman-Intensität

**Patentansprüche**

1. Verfahren zur quantitativen Bestimmung von Ruß, wobei die Rußprobe auf einen Probenträger aufgebracht,

    a) mit monochromatischem Licht bestrahlt und mittels eines ublichen Spektrometers ein Raman-Spektrum aufgezeichnet wird,
    dadurch gekennzeichnet, daß
    der Probenträger Material enthält, das in einer dem graphitischen Kohlenstoff ähnlichen Bindungsform vorliegt, und man
    b) die gleiche Rußprobe nach Bestrahlung mit monochromatischem Licht und Aufzeichnung eines Raman-Spektrums mit einer breitbandigen Lichtquelle bestrahlt und von der durch die Probe durchtretenden abgeschwächten Strahlung mittels des Spektrometers ein Absorptionsspektrum aufzeichnet,
    wobei die Reihenfolge der Schritte a) und b) untereinander vertauschbar ist,
    c) eine Kalibrierung vornimmt, indem Raman-Spektren und Absorptionsspektren vom Probenträger und vom Probenträger mit definierten Mengen graphitischen Kohlenstoffs erstellt werden,
    d) die zweiten Ableitungen der Raman-Spektren berechnet und das Intensitätsverhältnis einer von der Rußprobe und dem Probenträger stammenden Bande zu einer anderen, allein auf dem Probenträger basierenden Bande bestimmt und mit Hilfe der unter c) erstellten Kalibrationsgeraden für die Raman-Spektroskopie den Gehalt an graphitischem Kohlenstoff bestimmt,
    e) aus dem Lichtabsorptionsspektrum aus b) und der unter c) erstellten Kalibrationsgeraden für die Lichtabsorption die durch graphitischen Kohlenstoff bedingte Absorptionsänderung bestimmt und auch daraus einen Gehalt an graphitischem Kohlenstoff berechnet und
    f) durch die mögliche Differenz aus d) und e) den Anteil an polycyclischen aromatischen Kohlenwasserstoffen bestimmt.

2. Verfahren nach Anspruch 1,
    dadurch gekennzeichnet,
    daß im Schritt b) ein Teil der Strahlung reflektiert wird, falls in der Probe Sulfate vorhanden sind, und aus der Aufzeichnung eines Reflexionsspektrums mittels eines üblichen Spektrometers die vorhandene Sulfatmenge bestimmt wird, indem man

a) eine Kalibrierund vornimmt, indem Raman-Spektren vom Probenträger und vom Probenträger mit definierten Mengen Sulfat erstellt werden und
b) die zweiten Ableitungen der Raman-Spektren berechnet und das Intensitätsverhältnis der von einer Sulfatprobe und dem Probenträger stammenden Bande, sowie einer anderen, allein auf dem Probenträger basierenden Bande, bestimmt und mit Hilfe der unter a) erstellten Kalibrationsgerade für die Raman-Spektroskopie den Sulfatgehalt bestimmt.

3. Verfahren nach Anspruch 1,
dadurch gekennzeichnet,
daß im Schritt b) ein Teil der Strahlung reflektiert wird, falls in der Probe weitere, nicht absorbierende Stoffe vorhanden sind und aus der Aufzeichnung eines Reflexionsspektrums mittels eines üblichen Spektrometers diese weiteren, nicht absorbierenden Stoffe summarisch bestimmt werden.

4. Verfahren nach einem der Ansprüche 1 bis 3,
dadurch gekennzeichnet,
daß als Probenträger ein Polycarbonatsubstrat eingesetzt wird.

5. Vorrichtung zur Durchführung des Verfahrens nach Anspruch 1, unter Verwendung eines Probenträgers (4) zum Aufbringen der Rußprobe (5), einer senkrecht zu einer Umlenkeinheit (6) angeordneten monochromatischen Lichtquelle (3), wobei die Umlenkeinheit (6) so angeordnet ist, daß das monochromatische Licht auf die Probe oder den Probenträger auftrifft, und einer Sammellinse (2), die einem üblichen Spektrometer (8) mit Detektor (1) vorgeschaltet ist,
dadurch gekennzeichnet, daß
sie weiter beinhaltet eine Lichtquelle (7), die senkrecht zu einer Umlenkeinheit (9) angeordnet ist, wobei die Umlenkeinheit (9) so positioniert ist, daß das polychromatische Licht von der Lichtquelle (7) auf die Probe und den Probenträger auftrifft.

6. Vorrichtung nach Anspruch 5,
dadurch gekennzeichnet,
daß sie ein übliches Spektrometer (10) mit Detektor (1) zur Aufzeichnung eines Reflexionsspektrums umfaßt, das so angeordnet ist, daß ein wesentlicher Teil des von Probe und Probenträger reflektierten Lichtes registriert wird.

7. Vorrichtung nach einem der Ansprüche 4 bis 6,
dadurch gekennzeichnet,
daß die Spektrometer (8) und (10) Interferometer sind.

8. Vorrichtung nach einem der Ansprüche 5 bis 7,
dadurch gekennzeichnet,
daß die monochromatische Lichtquelle (3) ein Laser ist.

9. Vorrichtung nach einem der Ansprüche 5 bis 8,
dadurch gekennzeichnet,
daß die breitbandige Lichtquelle (7) Wolframlampe ist.

10. Vorrichtung nach einem der Ansprüche 5 bis 9,
dadurch gekennzeichnet,
daß die Umlenkeinheiten (6) und (9) unabhängig voneinander Prismen, Spiegel oder diffuse Reflektoren sind.

Abb. 1

EP 0 902 273 A2

# Abb. 2

# Abb. 3

Filter, beladen mit atmosphärischen Partikeln

Filter

Raman Intensität

Berechnung der zweiten Ableitung der Spektren

Filter

zusätzliche, durch graphitischen Kohlenstoff hervorgerufene Intensität

graphitischer Kohlenstoff (GC) + Filter

3500   3000   2500   2000   1500   1000   500  200

Wellenzahl [cm⁻¹]

# Abb. 4

# Abb. 5

spezifische Massenbeladung an Ruß (Monarch 71) [μg/cm²]

rel. Raman-Intensität [I(1600)/I(887)]

Abb. 6